# EUROPÄISCHE PATENTSCHRIFT

(11) **EP 1 415 718 B1**
(45) Veröffentlichungstag und Bekanntmachung des Hinweises auf die Patenterteilung: **16.01.2008**
(21) Anmeldenummer: 03019140.7
(22) Anmeldetag: 23.08.2003
(51) Int. Cl.: B05B 1/30, B05B 7/12, F16K 37/00

(54) **Spritzbeschichtungsvorrichtung für Beschichtungsflüssigkeit**
Spray coating device for a coating liquid
Dispositif de revêtement par projection d'un liquide de revêtement

(30) Priorität: 29.10.2002 DE 10250531
(43) Veröffentlichungstag der Anmeldung: 06.05.2004
(73) Patentinhaber: ITW Oberflächentechnik GmbH & Co.KG, 63128 Dietzenbach (DE)
(72) Erfinder: Dankert, Manfred, 63322 Rödermark (DE)
(74) Vertreter: Vetter, Ewald Otto

(56) Entgegenhaltungen:
- US-A- 4 944 243

## Beschreibung

Die Erfindung betrifft eine Spritzbeschichtungsvorrichtung für Beschichtungsflüssigkeit gemäß dem Oberbegriff von Anspruch 1.

Demgemäß betrifft die Erfindung eine Spritzbeschichtungsvorrichtung für Beschichtungsflüssigkeit, enthaltend eine Beschichtungsflüssigkeits-Spritzpistole, die ein Flüssigkeitsabgabeventil enthält, welches einen Flüssigkeitsventilsitz und einen Flüssigkeitsventilkörper aufweist, welcher relativ zum Flüssigkeitsventilsitz zwischen einer Flüssigkeitsventilschließstellung und einer Flüssigkeitsventiloffenstellung bewegbar ist.

Die Spritzbeschichtungsvorrichtung besteht mindestens aus einer Spritzpistole, welche die Merkmale der Erfindung aufweist. Die Erfindung betrifft jedoch auch eine Spritzbeschichtungsvorrichtung, welche zusätzlich zur Spritzpistole auch eine an sie angeschlossene Steuereinrichtung oder mindestens einen an sie angeschlossenen Sensor aufweist. Eine Spritzpistole für Beschichtungsflüssigkeit dieser Art ist aus der EP 1 048 359 A2 oder der US 4 944 243 bekannt. Ferner ist es aus der Praxis bekannt, die Spritzpistole mit einem elektromagnetischen Sensor zu versehen, welcher feststellt, ob sich der Flüssigkeitsventilkörper des Flüssigkeitsabgabeventils in der Ventilschließstellung oder in der Ventiloffenstellung befindet. Elektromagnetische Sensoren haben den Nachteil, dass sie über ein elektrisches Kabel mit der Spritzpistole verbunden und an der Spritzpistole durch einen elektrischen Stecker elektrisch angeschlossen werden. Dies ist deshalb nachteilig, weil die Stecker defektanfällig sind, beispielsweise einen leicht verbiegbaren kleinen Dorn als elektrischen Stecker enthalten, und dass das elektrische Kabel das Gewicht der Spritzpistole erhöht und die Bewegungsfreiheit der Spritzpistole beeinträchtigt.

Spritzpistolen können manuelle Spritzpistolen sein, welche manuell gehalten werden, oder automatische Spritzpistolen, welche von einem Träger gehalten und relativ zu einem Objekt bewegbar oder ortsfest angeordnet sein können. Der Träger kann ein Hubständer oder ein Roboter sein.

Die Spritzpistolen haben üblicherweise mindestens eine Elektrode, welche zur elektrostatischen Aufladung der Beschichtungsflüssigkeit an Gleichspannungs-Hochspannung anschließbar ist.

Eine Spritzpistole vergleichbarer Art für Beschichtungsflüssigkeit ist auch aus der DE 22 09 896 C2 bekannt.

Aus den genannten Schriften ist es auch bekannt, der Spritzpistole Druckluft als Zerstäubungsluft zuzuführen, welche die Zerstäubung der Beschichtungsflüssigkeit positiv beeinflusst, und/oder als Formungsluft zuzuführen, welche auf die von einer Sprühdüse versprühte Flüssigkeit gerichtet wird, um den Sprühstrahl zu formen, beispielsweise um aus einem im Querschnitt runden Sprühstrahl einen flachen Sprühstrahl zu formen und/oder um das Austreten von Flüssigkeitspartikeln aus dem zerstäubten Sprühstrahl zu verhindern. Bevor das Flüssigkeitsabgabeventil zur Abgabe und zum Zerstäuben der Beschichtungsflüssigkeit geöffnet wird, muss bereits die Zerstäubungsdruckluft und die Formungsdruckluft eingeschaltet sein, damit die Beschichtungsflüssigkeit vom Start weg die erforderliche Sprühqualität und Sprühform hat, die zur optimalen Beschichtung eines zu beschichtenden Objektes erforderlich ist, da sonst schlechte Beschichtungsqualitäten entsteht. Beim automatischen Beschichten von Objekten werden die Objekte automatisch an Spritzpistolen vorbei transportiert. In den Lücken zwischen den Objekten werden die Spritzpistolen abgeschaltet. Damit die Objekte vom Beginn bis zum Ende mit ausreichender Qualität beschichtet werden, muss das Einschalten und Ausschalten (Öffnen und Schließen) der Beschichtungsflüssigkeit und der Druckluft für die Zerstäubungsluft und/oder für die Formungsluft zeitmäßig genau aufeinander abgestimmt werden. Hierzu dient die Detektierung der Position des Flüssigkeitsventilkörpers relativ zum Flüssigkeitsventilsitz des Flüssigkeitsabgabeventils beim Stand der Technik durch elektromagnetische Sensoren.

Gemäß der Erfindung soll die Aufgabe gelöst werden, die Spritzbeschichtungsvorrichtung derart auszubilden, dass sie weniger defektanfällig ist und genauer arbeitet bezüglich der Steuerung von mindestens einer Druckluft relativ zur Steuerung der Abgabe von Beschichtungsflüssigkeit.

Diese Aufgabe wird gemäß der Erfindung durch die kennzeichnenden Merkmale von Anspruch 1 gelöst.

Demgemäß ist eine Beschichtungsvorrichtung gemäß der Erfindung dadurch gekennzeichnet, dass die Spritzpistole eine Messventilvorrichtung enthält, die in einem Druckgas-Messventilweg angeordnet und mit dem Flüssigkeitsventilkörper zur gemeinsamen Bewegung gekoppelt ist, um von diesem betätigt zu werden, wobei die Meßventilvorrichtung derart ausgebildet ist, dass sie in Abhängigkeit von den Stellungen des Flüssigkeitsventilkörpers jeweils dann in einer den Druckgas-Messventilweg verschließenden Schließstellung ist, wenn das Flüssigkeitsabgabeventil in seiner vollständigen Schließstellung ist und wenn es in seiner vollständigen Offenstellung ist, jedoch jeweils dann in einer den Druckgas-Messventilweg offen haltenden Offenstellung ist, wenn der Flüssigkeitsventilkörper in einer beliebigen Zwischenstellung zwischen seiner vollständigen Flüssigkeitsventil-Offenstellung und seiner vollständigen Flüssigkeitsventil-Schließstellung ist, so dass in Abhängigkeit davon, ob durch die Messventilvorrichtung Druckgas strömt oder nicht, automatisch ermittelbar ist, ob der Flüssigkeitsventilkörper in einer der beiden Stellungen Flüssigkeitsventiloffenstellung oder Flüssigkeitsventilschließstellung oder in einer beliebigen dazwischen liegenden Zwischenstellung ist.

Weitere Merkmale der Erfindung sind in den Unteransprüchen enthalten.

Der Flüssigkeitsventilkörper des Flüssigkeitsabgabeventils ist vorzugsweise eine Ventilnadel.

Durch die Erfindung ist ein Detektionssystem gegeben, durch welches die reale Anfangsposition und reale Endposition des Flüssigkeitsventilkörpers des Flüssigkeitsabgabeventils jeweils sehr genau und betriebssicher messbar ist. Dies bedeutet, dass man einen exakten Wert bekommt, wann das Flüssigkeitsabgabeventil der Spritzpistole geöffnet oder geschlossen ist. Dadurch werden alle Laufzeiten und Verzögerungen eines Spritzbeschichtungssystems automatisch erkannt und brauchen bei der Programmierung von Beschichtungsparametern für das Beschichten von Objekten nicht mehr berücksichtig zu werden.

Das Messprinzip der Erfindung beruht auf der Schallmessung oder auf der Luftdruckmessung. Der besondere Mechanismus in der Spritzpistole steuert einen Luftimpuls, der so lange anhält, bis der Flüssigkeitsventilkörper sich von seiner Anfangsposition (Ventilsitzoffenstellung oder Ventilsitzschließstellung) bis zu seiner Endposition (Ventilsitzschließstellung oder Ventilsitzoffenstellung) bewegt hat. Dieser Luftimpuls kann durch einen Ventilkörperpositionssensor durch Luftdruckmessung oder durch Schallmessung gemessen werden. Der Ventilkörperpositionssensor kann an der Spritzpistole angebracht oder vorzugsweise von dieser getrennt und durch einen Schlauch mit der Spritzpistole verbunden werden. Im Ventilkörperpositionssensor wird der Luftimpuls durch Schallmessung oder Druckmessung erfasst und zu Steuerungszwecken und/oder für Signalzwecke verwendet, vorzugsweise in ein elektrisches Signal umgewandelt. Das elektrische Signal wird dann elektronisch verstärkt, und vorzugsweise auch durch einen Filter gegen Umgebungsluftdrücke unempfindlich gemacht. Gemäß einem besonderen Merkmal der Erfindung wird das elektrische Signal so digitalisiert, dass am Ausgang des Ventilkörperpositionssensors ein elektrischer Impuls analog der Zeitdauer des Luftimpulses entsteht. Dies bedeutet, dass für die Dauer der Bewegung des Flüssigkeitsventilkörpers am Ausgang des Ventilkörperpositionssensors ein elektrisches digitales Signal messbar ist, welches dann direkt durch ein Steuersystem oder durch einen Computer ausgewertet werden kann für den Spritzbeschichtungsbetrieb. Eine solche Vorrichtung und ein solches Verfahren hat den Vorteil, dass der Sensor keine elektrischen Leitungen und Kontakte benötigt, welche mit der Spritzpistole verbunden werden müssen. Dadurch wird eine große Betriebssicherheit erreicht und es werden Verschmutzung und Explosionsgefahr ausgeschlossen. Der Druckluftschlauch, welcher den Ventilkörperpositionssensor mit der Spritzpistole verbindet, kann in einem Paket untergebracht werden, welches auch Schläuche für die Druckluftzufuhr zur Spritzpistole für Zerstäubungsdruckluft und/oder Formungsdruckluft und/oder Beschichtungsflüssigkeit enthält.

Der Ventilkörperpositionssensor kann derart ausgebildet sein, dass er das elektrische Signal durch einen Optokoppler galvanisch trennt.

Die Erfindung wird im folgenden mit Bezug auf die Zeichnungen anhand von bevorzugten Ausführungsformen als Beispiele beschrieben. In den Zeichnungen zeigen
- Fig. 1: schematisch einen Axialschnitt einer Spritzbeschichtungsvorrichtung nach der Erfindung, wobei sich ein Flüssigkeitsventilkörper eines Flüssigkeitsabgabeventils in einer Zwischenstellung zwischen einer vollständigen Flüssigkeitsventiloffenstellung und einer vollständigen Flüssigkeitsventilschließstellung befindet,
- Fig. 2: Teile der Spritzbeschichtungsvorrichtung von Fig. 1 um eine Ventillängsachse verdreht dargestellt, wobei der Flüssigkeitsventilkörper in der unteren Zeichnungshälfte in vollständiger Flüssigkeitsventilschließstellung und in der oberen Zeichnungshälfte in vollständiger Flüssigkeitsventiloffenstellung gezeigt ist,
- Fig. 3: schematisch einen Längsschnitt durch eine weitere Ausführungsform einer Spritzbeschichtungsvorrichtung nach der Erfindung für Beschichtungsflüssigkeit,
- Fig. 4: schematisch einen Längsschnitt einer nochmals weiteren Ausführungsform einer Spritzbeschichtungsvorrichtung nach der Erfindung für Beschichtungsflüssigkeit.

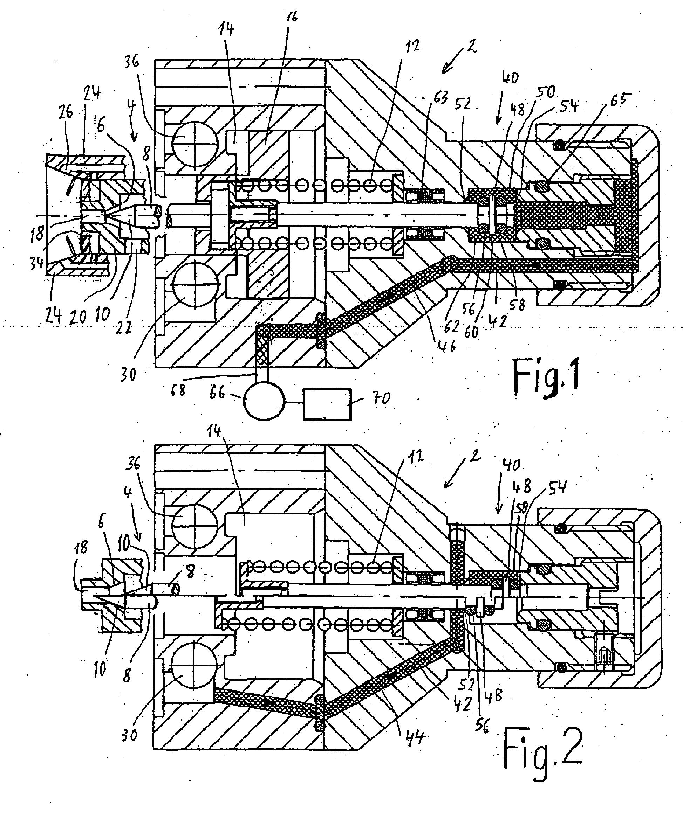

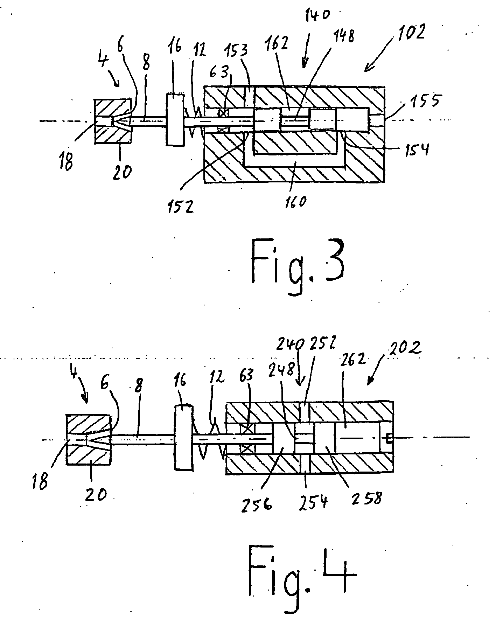

Die Fig. 1 und 2 der Zeichnungen zeigen eine Spritzbeschichtungsvorrichtung nach der Erfindung für Beschichtungsflüssigkeit und enthalten eine Beschichtungsflüssigkeits-Spritzpistole 2, die ein Flüssigkeitsabgabeventil 4 enthält, welches einen Flüssigkeitsventilsitz 6 und einen Flüssigkeitsventilkörper 8 in Form einer Ventilnadel mit einer konischen Nadelspitze 10 aufweist. Der Flüssigkeitsventilkörper 8 ist relativ zum Flüssigkeitsventilsitz 6 zwischen einer vollständigen Flüssigkeitsventilschließstellung, die in der unteren Hälfte von Fig. 2 gezeigt ist, und einer vollständigen Flüssigkeitsventiloffenstellung, welche in der oberen Hälfte von Fig. 2 gezeigt ist, linear bewegbar. Fig. 1 zeigt den Ventilkörper 8 in einer beliebigen Zwischenstellung zwischen der Flüssigkeitsventiloffenstellung und der Flüssigkeitsventilschließstellung von Fig. 2.

Die Betätigung des Flüssigkeitsventilkörpers 8 erfolgt in Schließrichtung durch eine Druckfeder 12 und in Öffnungsrichtung entgegen der Kraft der Druckfeder 12 durch Steuerdruckluft in einer Steuerdruckluftkammer 14 auf einen Steuerkolben 16, welcher mit dem Flüssigkeitsventilkörper 8 zur gemeinsamen linearen Bewegung verbunden ist.

Der Flüssigkeitsventilsitz 6 ist auf der Rückseite eines Düsenkanals 18 einer Zerstäuberdüse 20 gebildet, welche auf ihrer Rückseite durch einen Flüssigkeitskanal 22 zugeführte Beschichtungsflüssigkeit auf der Zerstäuberdüsenvorderseite zerstäubt, wenn das Flüssigkeitsabgabeventil 4 geöffnet ist.

Es können über die Zerstäuberdüse 20 nach vorne hinaus ragende Hörner 24 mit Formungsgasauslässen 26 für Formungsdruckgas vorgesehen sein, welche den zerstäuben Beschichtungsflüssigkeitsstrahl des Düsenkanals 18 formt und beispielsweise über einen Druckgaskanal 30 zugeführt wird.

Zusätzlich zu Formungsgasauslässen 26, oder anstatt diesen, können am vorderen Ende der Spritzpistole 2, beispielsweise in der Zerstäuberdüse 20 und/oder in den Hörnern 24, ein oder mehrere Zerstäubergasauslässe 34 vorgesehen sein, über welche Zerstäuberdruckgas ausströmen und die Zerstäubung der Beschichtungsflüssigkeit unterstützen kann. Das Zerstäubungsdruckgas kann über den gleichen Druckgaskanal 30 wie das Formungsdruckgas zugeführt werden, oder gemäß anderer Ausführungsform der Spritzpistole 2 durch einen davon getrennten Druckgaskanal 36.

Im oder neben dem Strömungsweg der Beschichtungsflüssigkeit, vorzugsweise stromabwärts von dem Düsenkanal 18, können eine oder mehrere Hochspannungselektroden 38 zur elektrischen Aufladung der Beschichtungsflüssigkeit angeordnet sein.

Gemäß der Erfindung enthält die Spritzpistole 2 eine Messventilvorrichtung 40, die in einem Druckgas-Messventilweg 42 angeordnet und mit dem Flüssigkeitsventilkörper 8 zur gemeinsamen axialen Bewegung gekoppelt ist, um von diesem betätigt zu werden. Anstatt der gezeigten Möglichkeit einer axialen Bewegung können auch andere Bewegungsrichtungen vorgesehen werden.

Dadurch wird die Messventilvorrichtung 40 in Abhängigkeit von Stellungen des Flüssigkeitsventilkörpers 8 jeweils dann in einer den Druckgas-Messventilweg 42 verschließenden Schließstellung gehalten, wenn das Flüssigkeitsabgabeventil 4 in seiner vollständigen Schließstellung ist und wenn es in seiner vollständigen Offenstellung ist, welche beide in Fig. 2 gezeigt sind. Die Messventilvorrichtung 40 wird jedoch von dem Flüssigkeitsventilkörper 8 jeweils dann in einer den Druckgas-Messventilweg 42 offen haltenden Offenstellung gehalten, wenn der Flüssigkeitsventilkörper 8 in einer beliebigen Zwischenstellung, von welchen eine in Fig. 1 gezeigt ist, zwischen seiner vollständigen Flüssigkeitsventiloffenstellung und seiner vollständigen Flüssigkeitsventilschließstellung ist. Dadurch ist in Abhängigkeit davon, ob durch die Messventilvorrichtung 40 Druckgas strömt oder nicht automatisch ermittelbar, ob der Flüssigkeitsventilkörper 8 in einer der beiden Stellungen vollständige Flüssigkeitsventiloffenstellung oder vollständige Flüssigkeitsventilschließstellung von Fig. 2 oder in einer beliebigen dazwischen liegenden Zwischenstellung ist, von welchen eine in Fig. 1 gezeigt ist.

Als Druckgasquelle für das Druckgas des Druckgas-Messventilwegs 42 gibt es verschiedene Möglichkeiten. Eine Möglichkeit besteht darin, das Druckgas über eine getrennte Leitung der Spritzpistole zuzuführen. Vorteilhaft bezüglich Materialaufwand, Gewicht und Betriebssicherheit ist es jedoch, das Druckgas für den Druckgas-Messventilweg 42 von einem der Druckgaskanäle 30 oder 36 abzuzweigen, welche Zerstäuberdruckgas oder Formungsdruckgas oder ein für beide Zwecke dienendes Druckgas enthalten. Gemäß Fig. 2 ist das Druckgas des Druckgas-Messventilweges 42 von dem Druckgaskanal 30 abgezweigt, dessen Druckgas entweder Zerstäubungsdruckgas, Formungsdruckgas oder beides sein kann.

Die Spritzpistole 2 ist in Fig. 2 gegenüber Fig. 1 um die Längsachse des Flüssigkeitsventilkörpers 8 verdreht dargestellt. Dadurch zeigt Fig. 2 einen stromaufwärts der Messventilvorrichtung 40 gelegenen Abschnitt 44 des Druckgas-Messventilweges 42, und Fig. 1 einen stromabwärtigen Abschnitt 46 dieses Druckgas-Messventilweges 42.

Die Messventilvorrichtung 40 enthält einen Messventilkörper 48 in einer Ventilkammer 50, welche an voneinander entgegengesetzten Kammerenden eine Druckgas-Einlassöffnung 52 und eine Druckgas-Auslassöffnung 54 aufweise, welche als Ventilsitze ausgebildet sind. Der Messventilkörper 48 ist von dem Flüssigkeitsventilkörper 8 linear bewegbar, um alternativ die eine oder die andere dieser beiden Ventilöffnungen 52 oder 54 zu verschließen oder zu öffnen, wobei die eine vollständig geöffnet ist, wenn die andere vollständig geschlossen ist, und umgekehrt.

Der Messventilkörper 48 ist vorzugsweise mit zwei Ventilelementen, z. B. Ventilsitzdichtungen 56 bzw. 58 versehen, von welchen die eine 56 an der Druckgas-Einlassventilöffnung 52 und die andere 58 an der Druckgas-Auslassventilöffnung 54 jeweils druckgasdicht anlegbar ist. Die Messventilvorrichtung 40 enthält somit zwei miteinander gekoppelte Ventile 52/56 und 54/58.

Die Druckgas-Einlassventilöffnung 52 und die Druckgas-Auslassventilöffnung 54 sind auf ihrer vom Meßventilkörper 48 verschließbaren Öffnungsseite durch einen Druckgasweg 60 miteinander verbunden, welcher vom Messventilkörper 48 alternativ durch Schließen der Druckgas-Einlassventilöffnung 52 oder durch Schließen der Druckgas-Auslassventilöffnung 54 verschließbar ist.

Bei der Ausführungsform der Fig. 1 und 2 ist der Messventilkörper 48 in einer Ventilkammer 62 angeordnet und hat von der Ventilkammerwand Abstand, so dass der Druckgasweg 60 zwischen der Druckgas-Einlassventilöffnung 52 und der Druckgas-Auslassventilöffnung 54 durch den Abstand zwischen dem Messventilkörper 48 und der Kammerwand der Ventilkammer 62 gebildet ist. Die Ventilkammer 62 ist beidseitig durch Dichtungen 63 bzw. 65 abgedichtet.

Gemäß einer besonderen Ausführungsform der Erfindung ist ein Sensor 66 vorgesehen, welcher ein Signal in Abhängigkeit davon erzeugt, ob Druckgas durch die Messventilvorrichtug 40 hindurch strömt oder nicht. Wenn der Druckgas-Messventilweg 42 nicht von einem der Druckgaskanäle 30 oder 36 für Zerstäuberdruckgas oder Formungsdruckgas mit Druckgas versorgt wird, sondern von einer davon unabhängigen Druckgasquelle, dann kann der Druckgassensor 66 im stromaufwärtigen Abschnitt 42 oder im stromabwärtigen Abschnitt 46, d. h. stromaufwärts oder stromabwärts der Messventile 48, 50, 52 angeordnet sein. Wenn dagegen, wie bei der Ausführungsform nach den Fig. 1 und 2, das Druckgas des Druckgas-Messventilweges 42 vom Druckgaskanal 30 oder 36 für Zerstäuberdruckgas oder Formungsdruckgas abgezweigt ist, dann ist der Sensor 66 vorzugsweise stromabwärts von den beiden Messventilen 48, 50, 52 angeordnet entsprechend den Fig. 1 und 2.

Der Sensor 66 kann an der Spritzpistole 2 angebracht werden oder vorzugsweise getrennt von ihr und mit dem stromabwärtigen Abschnitt 46 des Druckgas-Messventilweges 42 durch eine Druckluftleitung 68, vorzugsweise einen Schlauch, verbunden oder verbindbar sein.

Der Sensor 66 erzeugt in Abhängigkeit davon, ob Druckgas durch den Druckgas-Messventilweg 42 strömt, ein Signal, vorzugsweise ein elektrisches Signal, welches zur Steuerung des Flüssigkeitsabgabeventils 4 und/oder zu Signalzwecken für eine optische und/oder akustische Anzeige der Ventilposition des Flüssigkeitsventilkörpers 8 dienen kann. Vorzugsweise ist der Sensor 66 auf seiner Ausgangsseite signalmäßig mit einer Steuereinrichtung 70 verbunden zur Betätigung des Flüssigkeitsventilkörpers 8 mittels Steuerdruckluft in der Steuerdruckluftkammer 14. Dadurch kann das automatische Öffnen und Schließen des Flüssigkeitsabgabeventils 4 exakt auf Positionen von zu beschichtenden Objekten eingestellt werden, welche diese relativ zur Spritzpistole 2 haben.

Der Sensor 66 kann ein Drucksensor sein, welcher auf den Druck des Druckgases anspricht, welches durch die Messventilvorrichtung 40 hindurch strömt. Gemäß anderer Ausführungsform kann der Sensor 66 ein Schallsensor sein, welcher auf akustische Geräusche des Druckgases anspricht, welches durch die Messventilvorrichtung 40 hindurch strömt.

Bei der Ausführungsform von Fig. 3 ist der Druckgasweg zwischen einer Druckgas-Einlassventilöffnung 152 und einer Druckgas-Auslassventilöffnung 154 durch einen Bypass 160 zur Ventilkammer 162 gebildet, in welcher der Meßventilkörper 148 einer Messventilvorrichtung 140 zwischen der Druckgas-Einlassventilöffnung 152 und der Druckgas-Auslassventilöffnung 154 linear bewegbar ist. Der Meßventilkörper 148 verschließt die Druckgas-Einlassventilöffnung 152, wenn der Flüssigkeitsventilkörper 8 den Flüssigkeitsventilsitz 6 vollständig verschließt und sich damit in der Flüssigkeitsventilschließstellung befindet. Hierbei ist die Druckgas-Auslassventilöffnung 154 offen. Der Messventilkörper 148 verschließt jedoch die Druckgas-Auslassventilöffnung 154, wenn sich der Flüssigkeitventilkörper 8 relativ zum Flüssigkeitsventilsitz 6 in einer Flüssigkeitsventiloffenstellung befindet. Hierbei ist die Druckgas-Einlassventilöffnung 152 offen.

Die Druckgas-Einlassventilöffnung 152 hat nur in ihrem offenen Ventilzustand durch die Ventilkammer 162 hindurch Strömungsverbindung mit einem Druckgaseinlass 153, welcher an den stromaufwärtigen Abschnitt 42 des Druckgas-Messventilweges 42 von Fig. 1 und 2 angeschlossen ist. Die Druckgas-Auslassventilöffnung 154 hat nur in ihrem offenen Zustand durch die Ventilkammer 162 hindurch Strömungsverbindung mit einem Druckgasauslass 155, welcher an den stromabwärtigen Abschnitt 46 des Druckgas-Messventilweges 42 von Fig. 1 und 2 angeschlossen ist. In Fig. 3 ist der Flüssigkeitsventilkörper 8 (Ventilnadel) mit einem pneumatisch betätigbaren Kolben 16 und einer Druckfeder 12 entsprechend Fig. 1 und 2 versehen. Gemäß anderer Ausführungsform sind in dem Messventilkörper eine oder mehrere Bohrungen, durch welche der Druckgaseinlass 153 mit der Einlassventilöffnung 152 und/oder durch welche der Druckgasauslass 155 mit der Auslassventilöffnung 154 verbindbar ist, anstatt durch die Ventilkammer 162 hindurch. Ferner können Verbindungen teils durch die Bohrungen und teils durch die Ventilkammer gebildet sein.

Die Spritzpistole von Fig. 3 hat die gleichen Merkmale wie die Spritzpistole 2 der Fig. 1 und 2, soweit hier mit Bezug auf Fig. 3 nicht ausdrücklich Unterschiede beschrieben wurden.

Fig. 4 zeigt eine Spritzpistole 202 mit einem Messventilkörper 248, welcher in einer Ventilkammer 262 einer Messventilvorrichtung 240 von dem Flüssigkeitsventilkörper 8 linear bewegbar ist, mit welchem er zur gemeinsamen Bewegung gekoppelt ist. Der Messventilkörper 248 ist ein Ventilschieber, welcher an der Kammerseitenwand luftdicht anliegt. In der Kammerseitenwand sind einander benachbart, beispielsweise einander gegenüber liegend, eine Druckgas-Einlassventilöffnung 252 und eine Druckgas-Auslassventilöffnung 254 gebildet, welche vom Messventilkörper 248 alternativ miteinander verbindbar oder durch Verschließen voneinander trennbar sind in Abhängigkeit von den Axialpositionen des Messventilkörpers 248. Die beiden Öffnungen 252 und 254 sind strömungsmäßig voneinander getrennt, wenn der Flüssigkeitsventilkörper 8 in der vollständigen Flüssigkeitsventilschließstellung oder in der vollständigen Flüssigkeitsventiloffenstellung ist. Die beiden Öffnungen 252 und 254 sind jedoch strömungsmäßig miteinander verbunden durch die Ventilkammer 262 hindurch, zwischen zwei die Ventilkammer 262 abdichtenden und mit axialem Abstand voneinander angeordneten Ventilschieberkolben 256 und 258, wenn der Flüssigkeitsventilkörper 248 in einer zwischen den genannten Flüssigkeitsventil-Endstellungen liegenden Zwischenstellung ist. Der Messventilkörper 248 bildet einen Durchgang durch die Ventilkammer 262 hindurch zwischen den Öffnungen 252 und 254. Dies ist gemäß einer anderen Ausführungsform auch durch eine oder mehrere Bohrungen im Messventilkörper 248 möglich anstatt durch die Ventilkammer. Ferner können diese Verbindungen auch teils durch solche Bohrungen und teils durch die Ventilkammer gebildet sein.

Der Flüssigkeitsventilkörper 8 von Fig. 4 ist entsprechend den Fig. 1 und 2 durch einen Steuerkolben 16 pneumatisch und durch eine Druckfeder 12 betätigbar, wie dies mit Bezug auf die Fig. 1 und 2 beschrieben wurde.

Die Messventilvorrichtung 240 mit der Spritzpistole 202 von Fig. 4 ist in gleicher Weise wie die Ausführungsform der Fig. 1 und 2 ausgebildet mit Ausnahme der hier mit Bezug auf Fig. 4 beschriebenen Unterschiede.

Das Druckgas kann Luft oder anderes Gas sein.

## Patentansprüche

1. Spritzbeschichtungsvorrichtung für Beschichtungsflüssigkeit, enthaltend eine Beschichtungsflüssigkeits-Spritzpistole (2;102;202), die ein Flüssigkeitsabgabeventil (4) enthält, welches einen Flüssigkeitsventilsitz (6) und einen Flüssigkeitsventilkörper (8) aufweist, welcher relativ zum Flüssigkeitsventilsitz (6) zwischen einer Flüssigkeitsventilschließstellung und einer Flüssigkeitsventiloffenstellung bewegbar ist, wobei,
die Spritzpistole (2;102;202) eine Messventilvorrichtung (40;140;240) enthält, die in einem Druckgas-Messventilweg (42) angeordnet und mit dem Flüssigkeitsventilkörper (8) zur gemeinsamen Bewegung gekoppelt ist, um von diesem betätigt zu werden, **dadurch gekennzeichnet, dass** die Messventilvorrichtung (40;140;240) derart ausgebildet ist, dass sie in Abhängigkeit von den Stellungen des Flüssigkeitsventilkörpers (8) jeweils dann in einer den Druckgas-Messventilweg (42) verschließenden Schließstellung ist, wenn das Flüssigkeitsabgabeventil (4) in seiner vollständigen Schließstellung ist und wenn es in seiner vollständigen Offenstellung ist, jedoch jeweils dann in einer den Druckgas-Messventilweg (42) offen haltenden Offenstellung ist, wenn der Flüssigkeitsventilkörper (8) in einer beliebigen Zwischenstellung zwischen seiner vollständigen Flüssigkeitsventil-Offenstellung und seiner vollständigen Flüssigkeitsventil-Schließstellung ist, so dass in Abhängigkeit davon, ob durch die Messventilvorrichtung (40) Druckgas strömt oder nicht, automatisch ermittelbar ist, ob der Flüssigkeitsventilkörper (8) in einer der beiden Stellungen Flüssigkeitsventiloffenstellung oder Flüssigkeitsventilschließstellung oder in einer beliebigen dazwischen liegenden Zwischenstellung ist.

2. Spritzbeschichtungsvorrichtung nach Anspruch 1,
**dadurch gekennzeichnet,**
**dass** die Spritzpistole (2;102;202) mit einem Druckgaskanal (30) für die Abgabe von Druckgas in den Strömungsweg der Beschichtungsflüssigkeit versehen ist und dass der Druckgas-Messventilweg (42) von diesem Druckgaskanal (30) abzweigt.

3. Spritzbeschichtungsvorrichtung nach einem der vorhergehenden Ansprüche,
**dadurch gekennzeichnet,**
**dass** die Messventilvorrichtung (40) einen Messventilkörper (48;148) aufweist, welcher in einer Ventilkammer (62) zwischen einer Druckgas-Einlassventilöffnung (52;152) an einem Kammerendbereich und einer Druckgas-Auslassventilöffnung (54;154) an einem anderen Kammerendbereich von dem Flüssigkeitsventilkörper (8) linear bewegbar ist, um alternativ die eine oder die andere dieser beiden Öffnungen (52,54; 152,154) zu verschließen oder zu öffnen, und dass die Druckgas-Einlassventilöffnung (52;152) und die Druckgas-Auslassventilöffnung (54;154) durch einen Druckgasweg (60) miteinander verbunden sind, der vom Messventilkörper (48) alternativ durch Schließen der Druckgas-Einlassventilöffnung (52) oder durch Schließen der Druckgas-Auslassventilöffnung (54) verschließbar ist, wobei jeweils die eine Ventilöffnung offen ist, wenn die andere geschlossen ist, und umgekehrt.

4. Spritzbeschichtungsvorrichtung nach Anspruch 3,
**dadurch gekennzeichnet,**
**dass** der Messventilkörper (48) in einer Ventilkammer (62) angeordnet ist und von einer Ventilkammerwand seitlichen Abstand hat, wobei der Druckgasweg (60) zwischen der Druckgas-Einlassventilöffnung (52) und der Druckgas-Auslassventilöffnung (54) auf der vom Messventilkörper (48) verschließbaren Öffnungsseite, durch den Abstand zwischen dem Messventilkörper (48) und der Kammerwand gebildet ist.

5. Spritzbeschichtungsvorrichtung nach Anspruch 3,
**dadurch gekennzeichnet,**
**dass** der Druckgasweg (148) zwischen der Druckgas-Einlassventilöffnung (152) und der Durckgas-Auslassventilöffnung (154) durch einen Bypass zu einer Ventilkammer (162) gebildet ist, in welcher der Messventilkörper (148) zwischen der Druckgas-Einlassventilöffnung (152) und der Druckgas-Auslassventilöffnung (154) linear bewegbar ist.

6. Spritzbeschichtungsvorrichtung nach Anspruch 1 oder 2,
**dadurch gekennzeichnet,**
**dass** die Messventilvorrichtung (240) einen Messventilkörper (248) aufweist, welcher in einer Ventilkammer (262) von dem Flüssigkeitsventilköper (8) linear bewegbar ist, mit welchem er zur gemeinsamen Bewegung gekoppelt ist, dass der Messventilkörper (248) ein Ventilschieber ist, der an der Kammerseitenwand druckluftdicht anliegt, dass in der Kammerseitenwand eine Druckgas-Einlassventilöffnung (252) und eine Druckgas-Auslassventilöffnung (254) gebildet ist, die vom Messventilkörper (248) alternativ miteinander verbindbar oder voneinander trennbar sind in Abhängigkeit von den Axialpositionen des Flüssigkeitsventilkörpers (8), wobei die beiden Öffnungen (252,254) strömungsmäßig voneinander getrennt sind, wenn der Flüssigkeitsventilkörper (8) in der vollständigen Flüssigkeitsventilschließstellung oder in vollständiger Flüssigkeitsventiloffenstellung ist, jedoch die beiden Öffnungen (252,254) strömungsmäßig miteinander verbunden sind, wenn der Flüssigkeitsventilkörper (8) in einer beliebigen zwischen den genannten Flüssigkeitsventilstellungen liegenden Stellung ist.

7. Spritzbeschichtungsvorrichtung nach mindestens einem der vorhergehenden Ansprüche,
**dadurch gekennzeichnet,**
**dass** ein Sensor (66) vorgesehen ist, welcher ein Signal in Abhängigkeit davon erzeugt, ob Druckgas durch die Messventilvorrichtung (40;140;240) hindurch strömt oder nicht.

8. Spritzbeschichtungsvorrichtung nach Anspruch 7,
**dadurch gekennzeichnet,**
**dass** der Sensor (66) auf der stromabwärtigen Seite der Messventilvorrichtung (40;140;240) an den Druckgas-Messventilweg (42) angeschlossen ist.

9. Spritzbeschichtungsvorrichtung nach Anspruch 8,
**dadurch gekennzeichnet,**
**dass** der Sensor (66) örtlich getrennt von der Spritzpistole (2;102;202) angeordnet und durch eine Druckgasleitung (68) mit dem Druckgas-Messventilweg (42) verbunden oder verbindbar ist.

10. Spritzbeschichtungsvorrichtung nach einem der Ansprüche 7 bis 9,
**dadurch gekennzeichnet,**
**dass** der Sensor (66) an eine Steuereinrichtung (66) angeschlossen ist zur Betätigung des Flüssigkeitsventilkörpers (8) relativ zum Flüssigkeitsventilsitz (6) in Abhängigkeit von Positionen von zu beschichtenden Objekten relativ zur Spritzpistole (2; 1 02;202).

11. Spritzbeschichtungsvorrichtung nach mindestens einem der Ansprüche 7 bis 10,
**dadurch gekennzeichnet,**
**dass** der Sensor (66) ein Drucksensor ist, welcher auf den Druck des Druckgases der Messventilvorrichtung (40;140;240) anspricht.

12. Spritzbeschichtungsvorrichtung nach mindestens einem der Ansprüche 7 bis 10,
**dadurch gekennzeichnet,**
**dass** der Sensor (66) ein Schallsensor ist, welcher auf akustische Geräusche im Druckgasströmungsweg der Messventilvorrichtung (40;140;240) reagiert.

## Claims

1. Spray-coating appliance for coating liquid, containing a coating-liquid spray gun (2; 102; 202) containing a liquid-discharge valve (4) which has a liquid-valve seat (6) and a liquid-valve body (8) which is moveable relative to the liquid-valve seat (6) between a liquid-valve closing position and a liquid-valve open position, wherein the spray gun (2; 102; 202) contains a measuring-valve device (40; 140; 240) which is arranged in a compressed-gas measuring-valve path (42) and which is coupled, for joint movement, to the liquid-valve body (8) in order to be actuated by the latter, **characterized in that** the measuring-valve device (40; 140; 240) is designed in such a way that, as a function of the positions of the liquid-valve body (8), the said measuring-valve device is in each case in a closing position closing the compressed-gas measuring-valve path (42), when the liquid-discharge valve (4) is in its completely closing position and when it is in its completely open position, but is in each case in an open position holding the compressed-gas measuring-valve path (42) open, when the liquid-valve body (8) is in any intermediate position between its liquid-valve completely open position and its liquid-valve completely closing position, so that, depending on whether compressed gas flows through the measuring-valve device (40) or not, it can be determined automatically whether the liquid-valve body (8) is in one of the two positions, liquid-valve open position or liquid-valve closing position, or in any intermediate position lying between them.

2. Spray-coating appliance according to Claim 1, **characterized in that** the spray gun (2; 102; 202) is provided with a compressed-gas duct (30) for the discharge of compressed gas into the flow path of the coating liquid, and **in that** the compressed-gas measuring-valve path (42) branches off from this compressed-gas duct (30).

3. Spray-coating appliance according to one of the preceding claims, **characterized in that** the measuring-valve device (40) has a measuring-valve body (48; 148) which is moveable linearly in a valve chamber (62) by the liquid-valve body (8) between a compressed-gas inlet-valve orifice (52; 152) at one chamber end region and a compressed-gas outlet valve orifice (54; 154) at another chamber end region, in order alternatively to close or to open one or other of these two orifices (52, 54; 152, 154), and **in that** the compressed-gas inlet-valve orifice (52; 152) and the compressed-gas outlet-valve orifice (54; 154) are connected to one another by means of a compressed-gas path (60) which is capable of being closed by the measuring-valve body (48) alternatively by the closing of the compressed-gas inlet-valve orifice (52) or by the closing of the compressed-gas outlet-valve orifice (54), in each case one valve orifice being open when the other is closed, and vice versa.

4. Spray-coating appliance according to Claim 3, **characterized in that** the measuring-valve body (48) is arranged in a valve chamber (62) and is at a lateral distance from a valve-chamber wall, the compressed-gas path (60) between the compressed-gas inlet-valve orifice (52) and the compressed-gas outlet-valve orifice (54) being formed, on the orifice side capable of being closed by the measuring-valve body (48), by the distance between the measuring-valve body (48) and the chamber wall.

5. Spray-coating appliance according to Claim 3, **characterized in that** the compressed-gas path (148) between the compressed-gas inlet-valve orifice (152) and the compressed-gas outlet-valve orifice (154) is formed by a bypass to a valve chamber (162), in which the measuring-valve body (148) is moveable linearly between the compressed-gas inlet-valve orifice (152) and the compressed-gas outlet-valve orifice (154).

6. Spray-coating appliance according to Claim 1 or 2, **characterized in that** the measuring-valve device (240) has a measuring-valve body (248) which is moveable linearly in a valve chamber (262) by the liquid-valve body (8), to which it is coupled for joint movement, **in that** the measuring-valve body (248) is a valve slide which comes to bear, tight against compressed air, against the chamber side wall, and **in that** the chamber side wall has formed in it a compressed-gas inlet-valve orifice (252) and a compressed-gas outlet-valve orifice (254) which can be alternatively connected to one another or separated from on another by the measuring-valve body (248) as a function of the axial positions of the liquid-valve body (8), the two orifices (252, 254) being flow-separated from one another when the liquid-valve body (8) is in the liquid-valve completely closing position or in the liquid-valve completely open position, with the two orifices (252, 254) being flow-connected to one another when the liquid-valve body (8) is in any position lying between the said liquid-valve positions.

7. Spray-coating appliance according to at least one preceding claims, **characterized in that** a sensor (66) is provided, which generates a signal as a function of whether compressed gas flows through the measuring-valve device (40; 140; 240) or not.

8. Spray-coating appliance according to Claim 7, **characterized in that** the sensor (66) is connected to the compressed-gas measuring-valve path (42) on the downstream side of the measuring-valve device (40; 140; 240).

9. Spray-coating appliance according to Claim 8, **characterized in that** the sensor (66) is arranged at a separate location from the spray gun (2; 102; 202) and is connected or connectable to the compressed-gas measuring-valve path (42) by means of a compressed-gas line (68).

10. Spray-coating appliance according to one of Claims 7 to 9, **characterized in that** the sensor (66) is connected to a control device (70) in order to actuate the liquid-valve body (8) relative to the liquid-valve seat (6) as a function of positions of articles to be coated in relation to the spray gun (2; 102; 202).

11. Spray-coating appliance according to at least one of Claims 7 to 10, **characterized in that** the sensor (68) is a pressure sensor which responds to the pressure of the compressed gas of the measuring-valve device (40; 140; 240).

12. Spray-coating appliance according to at least one of Claims 7 to 10, **characterized in that** the sensor (66) is a sound sensor which reacts to acoustic noises in the compressed-gas flow path of the measuring-valve device (40; 140; 240).

## Revendications

1. Dispositif de revêtement par pulvérisation d'un liquide de revêtement, contenant un pistolet pulvérisateur de liquide de revêtement (2 ; 102 ; 202) qui contient une soupape de distribution de liquide (4) qui présente un siège de soupape de liquide (6) et un corps de soupape de liquide (8) qui peut être déplacé par rapport au siège de soupape de liquide (6) entre une position de fermeture de soupape de liquide et une position d'ouverture de soupape de liquide,
le pistolet pulvérisateur (2 ; 102 ; 202) contenant un dispositif de soupape de mesure (40 ; 140 ; 240) qui est disposé dans une voie de soupape de mesure de gaz sous pression (42) et qui est accouplé au corps de soupape de liquide (8) en vue d'un déplacement en commun, afin d'être actionné par celui-ci, **caractérisé en ce que** le dispositif de soupape de mesure (40 ; 140 ; 240) est réalisé de telle sorte qu'il soit alors à chaque fois dans une position de fermeture fermant la voie de soupape de mesure de gaz sous pression (42), en fonction des positions du corps de soupape de liquide (8), lorsque la soupape de distribution de liquide (4) est dans sa position de fermeture complète et lorsqu'elle est dans une position d'ouverture complète, mais est à chaque fois dans une position d'ouverture maintenant ouverte la voie de soupape de mesure de gaz sous pression (42), lorsque le corps de soupape de liquide (8) est dans une position intermédiaire quelconque entre sa position d'ouverture complète de la soupape de liquide et sa position de fermeture complète de soupape de liquide, de sorte qu'en fonction de l'écoulement ou non de gaz sous pression à travers le dispositif de soupape de mesure (40), on puisse détecter automatiquement si le corps de soupape de liquide (8) se trouve dans l'une des deux positions, à savoir celle d'ouverture de la soupape de liquide ou celle de fermeture de la soupape de liquide, ou bien dans une position intermédiaire quelconque entre elles.

2. Dispositif de revêtement par pulvérisation selon la revendication 1,
**caractérisé en ce que**
le pistolet pulvérisateur (2 ; 102 ; 202) est pourvu d'un canal de gaz sous pression (30) pour distribuer du gaz sous pression dans la voie d'écoulement du liquide de revêtement et **en ce que** la voie de soupape de mesure de gaz sous pression (42) part de ce canal de gaz sous pression (30).

3. Dispositif de revêtement par pulvérisation selon l'une quelconque des revendications précédentes,
**caractérisé en ce que**
le dispositif de soupape de mesure (40) présente un corps de soupape de mesure (48 ; 148) qui peut être déplacé linéairement dans une chambre de soupape (62) entre une ouverture de soupape d'entrée de gaz sous pression (52 ; 152) au niveau d'une région d'extrémité- de chambre et une ouverture de soupape de sortie de gaz sous pression (54 ; 154) au niveau d'une autre région d'extrémité de chambre du corps de soupape de liquide (8), afin de fermer ou d'ouvrir en alternance l'une ou l'autre de ces deux ouvertures (52, 54 ; 152, 154), et **en ce que** l'ouverture de soupape d'entrée de gaz sous pression (52 ;152) et l'ouverture de soupape de sortie de gaz sous pression (54 ; 154) sont connectées l'une à l'autre par une voie de gaz sous pression (60), qui peut être fermée par le corps de soupape de mesure (48) soit par fermeture de l'ouverture de soupape d'entrée de gaz sous pression (52) soit par fermeture de l'ouverture de soupape de sortie de gaz sous pression (54), l'une des ouvertures de soupape étant à chaque fois ouverte lorsque l'autre est fermée et inversement.

4. Dispositif de revêtement par pulvérisation selon la revendication 3,
**caractérisé en ce que**
le corps de soupape de mesure (48) est disposé dans une chambre de soupape (62) et présente une distance latérale à la paroi de la chambre de soupape, la voie de gaz sous pression (60) entre l'ouverture de soupape d'entrée de gaz sous pression (52) et l'ouverture de soupape de sortie de gaz sous pression (54) étant formée du côté de l'ouverture pouvant être fermée par le corps de soupape de mesure (48), par la distance entre le corps de soupape de mesure (48) et la paroi de la chambre.

5. Dispositif de revêtement par pulvérisation selon la revendication 3,
**caractérisé en ce que**
la voie de gaz sous pression (148) entre l'ouverture de soupape d'entrée de gaz sous pression (152) et l'ouverture de soupape de sortie de gaz sous pression (154) est formée par une dérivation vers une chambre de soupape (162), dans laquelle le corps de soupape de mesure (148) peut être déplacé linéairement entre l'ouverture de soupape d'entrée de gaz sous pression (152) et l'ouverture de soupape de sortie de gaz sous pression (154).

6. Dispositif de revêtement par pulvérisation selon la revendication 1 ou 2,
**caractérisé en ce que**
le dispositif de soupape de mesure (240) présente un corps de soupape de mesure (248) qui peut être déplacé linéairement dans une chambre de soupape (262) par le corps de soupape de liquide (8), auquel il est accouplé pour se déplacer conjointement, **en ce que** le corps de soupape de mesure (248) est un coulisseau de soupape qui s'applique de manière étanche à l'air sous pression contre la paroi latérale de la chambre, **en ce que** dans la paroi latérale de la chambre sont formées une ouverture de soupape d'entrée de gaz sous pression (252) et une ouverture de soupape de sortie de gaz sous pression (254), qui peuvent être connectées l'une à l'autre ou séparées l'une de l'autre alternativement par le corps de soupape de mesure (248), en fonction des positions axiales du corps de soupape de liquide (8), les deux ouvertures (252, 254) étant séparées l'une de l'autre fluidiquement lorsque le corps de soupape de liquide (8) est dans la position de fermeture complète de la soupape de liquide ou dans la position d'ouverture complète de la soupape de liquide mais les deux ouvertures (252, 254) sont connectées l'une à l'autre fluidiquement lorsque le corps de soupape de liquide (8) est dans une position quelconque entre les deux positions de soupape de liquide citées.

7. Dispositif de revêtement par pulvérisation selon au moins l'une quelconque des revendications précédentes,
**caractérisé en ce que**
l'on prévoit un capteur (66) qui produit un signal en fonction de la détection ou non d'un écoulement de gaz sous pression à travers le dispositif de soupape de mesure (40 ; 140 ; 240).

8. Dispositif de revêtement par pulvérisation selon la revendication 7,
**caractérisé en ce que**
le capteur (66) est raccordé du côté aval du dispositif de soupape de mesure (40 ; 140 ; 240) à la voie de soupape de mesure de gaz sous pression (42) .

9. Dispositif de revêtement par pulvérisation selon la revendication 8,
**caractérisé en ce que**
le capteur (66) est disposé localement séparé du pistolet pulvérisateur (2 ; 102 ; 202) et est connecté ou peut être connecté par une conduite de gaz sous pression (68) à la voie de soupape de mesure de gaz sous pression (42).

10. Dispositif de revêtement par pulvérisation selon l'une quelconque des revendications 7 à 9,
**caractérisé en ce que**
le capteur (66) est raccordé à un dispositif de commande (66) pour l'actionnement du corps de soupape de liquide (8) par rapport au siège de soupape de liquide (6) en fonction de positions des objets à revêtir par rapport au pistolet pulvérisateur (2 ; 102 ; 202).

11. Dispositif de revêtement par pulvérisation selon au moins l'une quelconque des revendications 7 à 10,
**caractérisé en ce que**
le capteur (66) est un capteur de pression qui réagit à la pression du gaz sous pression du dispositif de soupape de mesure (40 ; 140 ; 240).

12. Dispositif de revêtement par pulvérisation selon au moins l'une quelconque des revendications 7 à 10,
**caractérisé en ce que**
le capteur (66) est un capteur acoustique qui réagit à des bruits acoustiques dans la voie d'écoulement de gaz sous pression du dispositif de soupape de mesure (40 ; 140 ; 240).
